# EUROPÄISCHE PATENTSCHRIFT

(11) **EP 2 547 966 B1**
(45) Veröffentlichungstag und Bekanntmachung des Hinweises auf die Patenterteilung: **11.01.2017**
(21) Anmeldenummer: 11713461.9
(22) Anmeldetag: 15.03.2011
(51) Int. Cl.: F24J 2/00, F24J 2/40, E04B 1/74, E04F 13/08, E06B 7/084

(54) **FASSADE UND VERFAHREN ZUM STEUERN DER WÄRMETECHNISCHEN EIGENSCHAFTEN DER FASSADE**
FAÇADE AND METHOD FOR CONTROLLING THE THERMAL PROPERTIES OF THE FAÇADE
FAÇADE ET PROCÉDÉ DE CONTRÔLE DES PROPRIÉTÉS THERMIQUES DE LA FAÇADE

(30) Priorität: 15.03.2010 AT 4202010
(43) Veröffentlichungstag der Anmeldung: 23.01.2013
(73) Patentinhaber: Schwarzmayr, Rudolf, 4983 St. Georgen b.O. (AT)
(72) Erfinder: Schwarzmayr, Rudolf, 4983 St. Georgen b.O. (AT)
(74) Vertreter: Ellmeyer, Wolfgang
(86) Internationale Anmeldenummer: PCT/AT2011/000131
(87) Internationale Veröffentlichungsnummer: WO 2011/113077

(56) Entgegenhaltungen:
- WO-A1-01/07845
- WO-A1-2007/026388
- DE-A1- 3 230 639
- DE-A1- 3 523 244
- DE-A1- 19 651 104

## Beschreibung

Die Erfindung betrifft eine Fassade an einer Gebäudehülle, insbesondere Gebäudewand, mit beweglichen Paneelen, die vorzugsweise um eine vertikale oder horizontale Achse verschwenkbar sind.

Die Erfindung betrifft des Weiteren ein Verfahren zum Steuern der wärmetechnischen Eigenschaften einer Gebäudehülle, insbesondere Gebäudewand, mit Hilfe einer Fassade mit beweglichen, vorzugsweise um eine vertikale oder horizontale Achse verschwenkbaren Paneelen.

Zur Wärmedämmung von Gebäuden werden diese üblicherweise mit einer isolierenden Hülle umgeben, welche einen Wärmeaustausch zwischen der Umgebung und der Gebäudewand verringert. Diese isolierenden Hüllen verhindern nicht nur den Verlust von Wärme an die Umgebung, sondern auch, dass Wärme der Umgebung oder der Sonneneinstrahlung von der Außenwand des Gebäudes aufgenommen wird. Letzteres ist zwar in der warmen Jahreszeit wünschenswert, da es eine unerwünschte, zu starke Erwärmung des Gebäudes verhindert, ist aber in der kalten Jahreszeit nachteilig, wenn die Sonneneinstrahlung zur Erwärmung der Gebäudewand und somit des Gebäudes genützt werden könnte.

Es sind auch Fassaden der eingangs genannten Art bekannt, welche Paneele oder dergleichen aufweisen, welche gezielt zur Steuerung der Sonneneinstrahlung auf eine Außenfläche eines Gebäudes verschwenkt werden können. Diese werden üblicher Weise als Beschattungselemente eingesetzt und sind von der Gebäudeaußenwand beabstandet und jedenfalls hinterlüftet.

Ähnliche Fassaden sind aus dem Stand der Technik bekannt, zum Beispiel aus WO01/07845, DE3523244, DE19651104, DE3230639 oder WO2007/026388.

Die bekannten Systeme sind relativ unflexibel, einerseits weil Gebäudeisolierungen einen Wärmeaustausch generell verhindern, und sich mit bisher bekannten Fassadengestaltungen mit verschwenkbaren Elementen nur eine erhöhte Sonneneinstrahlung verhindern lässt.

Die Erfindung liegt daher die Aufgabe zu Grunde, eine Fassade an einer Gebäudewand zur Verfügung zu stellen, welche eine gezieltere Steuerung des Wärmeflusses von der Umgebung in Gebäudewand und umgekehrt ermöglicht.

Gelöst wird diese Aufgabe durch eine Fassade wie sie in den Ansprüche definiert ist.

Bei einem Verfahren der eingangs genannten Art wird diese Aufgabe dadurch gelöst, dass mittels einer Fassade nach einem der Ansprüche 1-13 ein zwischen der Gebäudewand und Fassadenelementen gebildeter Raum geöffnet wird, wenn eine Konvektion und/oder Strahlungsaustausch mit der Umgebung erwünscht ist und abgeschlossen wird, wenn eine Konvektion und/oder Strahlungsaustausch mit der Umgebung nicht erwünscht ist.

Aufgabe dieser Erfindung ist die Beeinflussung des Wärmeflusses durch ein bewegliches Fassadensystem, das vor Oberflächen wie Gebäudehüllen angebracht wird, und variabel dämmende Eigenschaften aufweist. Das Fassadensystem wird je nach Erfordernis bewegt oder gesteuert, ist somit geschlossen und dämmend oder in unterschiedlichen Stellungen geöffnet.

Das Fassadensystem kann grundsätzlich vor opaken, diffusen, transluzenten, transparenten Oberflächen angebracht werden, sowie auch als alleinige Begrenzungsfläche mit einer Wand ausgeführt werden.

Die Temperierwirkung dieser gesteuerten und selektiv-durchlässigen Konstruktion wird in Kombination mit einem Speichermedium wesentlich erhöht. Die einfachste Form der Kombination mit einem Speichermedium besteht in der Anbringung vor einer Wand. Diese hat für eine effiziente Wirkung günstigerweise eine ausreichend hohem Leitwert und hoher Speicherkapazität. Es sind vielfältige Kombinationen ausführbar. Beispielsweise mit einer thermisch optimal gestalteten Schicht, die aus Material mit günstiger Absorptions- und Speicherwirkung besteht, und gemeinsam mit den beweglichen Fassadenelementen der Gebäudehülle vorgesetzt wird. Es können auch Materialien mit erhöhter Speicherwirkung verwendet werden.

Eine sehr massive Verstärkung dieses Effekts wird durch die Nutzung der Sonneneinstrahlung erreicht. Sonneneinstrahlung stellt das Vielfache der Energie zur Verfügung die durch eine gedämmte Gebäudeoberfläche verloren geht. Um die Einstrahlung maximal nutzen zu können, werden die Paneele bewegt und idealer weise der Sonne nachgeführt.

Als Aktivenergiefassade wird im Folgenden ein bewegliches Fassadensystem bezeichnet, hinter der sich üblicherweise eine freie Schicht, z.B. ein Luftspalt od. Luftraum befindet. Das Element hinter der Aktivenergiefassade wird als Kernwand bezeichnet. Diese kann sich in Form aller bekannten Wandbildner manifestieren.

Um die Nutzung der Einstrahlung zu optimieren kann die Oberfläche der Kernwand entsprechend gestaltet werden. Die Gestaltung wird günstigerweise derart erfolgen, dass die Aufnahme der eingestrahlten Sonnenenergie maximiert wird. Des Weiteren wird je nach zu erwartender Witterung und Klimabedingungen auf einen Reduktion des Windeinflusses, eine Strahlungsführung, eine Minimierung aber auch Maximierung der Abstrahlung angestrebt werden.

Durch die Ausbildung eines Luftspaltes hinter der Aktivenergiefassade wird die Wirkung verstärkt. Für die Dämmwirkung es Luftspalts wird die Konstruktion derart ausgeführt, dass die im geschlossenen Zustand die Grenzflächen und Kanten ausreichend abdichtet, so dass ein ruhender Luftraum entsteht.

Ebenfalls werden die den Luftraum umschließenden Oberflächen günstigerweise derart ausgeführt, dass im geschlossenen Zustand alle Formen des Wärmeverlustes minimiert werden.

Dies erfolgt beispielsweise über eine Gestaltung der Innenseite der Paneele des Aktivenergiefassaden-Systems. Diese werden derart ausgeführt, dass sie Wärmestrahlung an die Kernwand zurückreflektieren (Emissionsgrad < 0,4) . Die Wandseite, die Außenseite der Kernwand wird günstigerweise derart gestaltet, dass sie zwar die Sonnenenergie maximal aufnehmen kann, aber die Abstrahlung der Wärme der Wand minimiert. Dies kann durch eine Beschichtung erfolgen, welche die langwelligere Strahlung der Wand weniger gut passieren lässt. Es kann auch eine Zwischenschicht unterschiedlicher Ausgestaltung angebracht werden, die diese Funktion erfüllt.

Die Paneele des Aktivenergiefassaden-Systems bestehen in einer erfindungsgemäßen Ausführung aus einem Kern aus Material mit hoher Dämmeigenschaft und sind innen mit einer hellen, günstigerweise die Strahlung reflektierenden Oberfläche ausgestattet. Die Außenseite ist derart gestaltet, dass sie die mechanischen Eigenschaften des Paneels verbessert und eine Befestigung unterschiedlicher Oberflächengestaltungen und -materialien erlaubt.

Die Randbereiche und Kanten werden derart ausgestaltet, dass sie eine ausreichende Abdichtung erreichen. Dies kann erfolgen durch ein elastisches Element, mehrere elastische Elemente, ein Labyrinthsystem, ein Nut- Feder-System oder eine Kombination davon.

Die Gestaltung des Luftspalts wird entsprechend des vorherrschenden Wärmestromes erfolgen. Wird das System in einer Umgebung eingesetzt, in dem sowohl das Erwärmen als auch das Kühlen des dahinter liegenden Volumens angestrebt wird, so ist bei der Gestaltung des Luftraumes die Möglichkeit starker Ausstrahlung zu berücksichtigen. Wird das System in einer Umgebung eingesetzt, in der vornehmlich ein Erwärmen gewünscht wird, so werden auch häufiger Elemente eingesetzt werden, die eine Zwischenschicht im Luftspalt ausbilden, sei es in der Form zu einer massiven Verminderung möglicher Strömungen, oder in der Ausgestaltung eines Volumens mit Treibhauswirkung.

Dazu wird eine transparente Zwischenschicht im Luftspalt angebracht. Diese Zwischenschicht kann eben aber auch profiliert ausgeführt sein. Sie kann sowohl abgedichtet, luft- bzw. feuchtigkeitsdurchlässig, als auch unterbrochen ausgeführt werden. Durch die Ausbildung von abgegrenzten, teilweise geschlossenen, oder geschlossenen "Minikollektorflächen" wird der Absorptionseffekt deutlich gesteigert.

Zur Reduktion der Strömung sowohl bei geöffnetem als auch bei geschlossenen Paneelen können Trennelemente eingefügt werden. Diese können beispielsweise transparent oder reflektierend ausgeführt sein. Sie können auch zur Schmutzabweisung eingesetzt sein.

In einer erfindungsgemäßen Ausführung werden der Abstand des Paneelsystems von der Gebäudeoberfläche bzw. der Abstand der Trennflächen, so gewählt, das die Summe der Verluste minimal ist (Leitung, Strahlung, Strömung). In dieser erfindungsgemäßen Ausführung sind diese Abstände kleiner 30cm. Durch Abstandsmaße kleiner 10cm wird der Anteil der Konvektionsverluste weiter reduziert. In einer weiteren erfindungsgemäßen Ausführung werden durch Abstandsmaße von 3-6 cm sehr gute Werte erzielt.

Durch den Raum zwischen den Paneelen und der Wand, der bei Bedarf geöffnet und geschlossen werden kann, besteht die Möglichkeit, einerseits (bei geschlossenem Raum) eine zusätzliche Isolierschicht durch die im Raum aufgenommene Luft zu schaffen und andererseits den Energieaustausch mit der Umgebung, beispielsweise eine gezielte Konvektion, und somit Erwärmung oder Kühlung der Gebäudewand zu ermöglichen, wenn der Raum geöffnet ist und die darin enthaltene Luft durch ihre Konvektion eine Erwärmung oder Kühlung der Gebäudewand bewirkt. Außerdem kann durch Öffnen oder Schließen der Paneele ein Strahlungsaustausch mit der Umgebung erzielt oder verhindert werden. Dadurch kann z.B. die Sonneneinstrahlung zur gezielten Erwärmung der Gebäudewand und somit des Gebäudes genutzt werden.

Die Nutzung der Speicherfähigkeit der hinter der Fassade liegenden Baustruktur, insbesondere Gebäudehülle bzw. Gebäudewand, ist von großem Vorteil, da damit die Wärme zeitversetzt zu der Zeit, in der sie mehr gebraucht wird als zur Einstrahlungszeit, genutzt werden kann.

Ohne eine gewisse Mindestspeicherfähigkeit könnte die Wand sehr schnell überhitzen und zu wenig Wärme für Bedarfszeiten speichern. Eine hohe Speicherfähigkeit wirkt insbesondere bei der Überbrückung einstrahlungsarmer Perioden. (Schlechtwetterzeiten), und erhöht so den Gesamtwirkungsgrad.

Hat die Gebäudestruktur einen Aufbau, bzw. besteht die Gebäudestruktur aus einem Material das Wärmespeichereigenschaften aufweist, so wurde diese bisher nicht in vollem Umfang genutzt, da sich die zyklisch wiederkehrenden Temperaturschwankungen mit zunehmender Tiefe aufheben, so dass es als Stand der Technik gilt, dass die Speicherfähigkeit der Mauern nur bis zu einer begrenzten Tiefe angerechnet werden darf.

Durch das erfindungsgemäße System wird der Wärmestrom aktiv beeinflusst, so dass diese Eingrenzungen nun nicht mehr gelten. Durch die gezielte Steuerung des Wärmestromes durch Beeinflussung des Wärmeübergangs an der Fassadenseite, wird die Bausubstanz als Wärmespeicher und Wärmeleiter verwendet. Dabei ist es vorteilhaft, wenn die Gebäudehüllflächen im Wesentlichen keine sehr guten Leitfähigkeiten aufweisen.

Lamda-Werte zwischen 0,1 und 5 W/mK können als geeignet angenommen werden. Größere Leitwerte >5 wie z.B bei Metallen oder deutlich kleinere <0,1 wie z.B. bei Dämmstoffen sind eher ungünstig.

Durch die Speicherung und langsame Weiterleitung kann somit die gewonnene Energie in die Zeiten verschoben werden in denen weniger Energie von außen zur Verfügung steht. Solare Wärme wird somit effektiv gewonnen, gespeichert und zur Verfügung gestellt. In Sommerbetrieb wird durch ein geändertes Öffnungs- und Schließverfahren ein umgekehrter Effekt erzielt.

Speicherkapazitäten über 900 J/kgK können als gut geeignet angenommen werden. Materialien mit hoher Rohdichte sind auch Materialien bevorzugter Speicherfähigkeit. Materialien mit einer Rohdichte > 250kg/m³ sind geeignet. Rohdichten über 600 kg/m³ können als gut bezeichnet werden.

Im Zusammenwirken mit der Speicherfähigkeit der zentralen Gebäudehüllfläche (z.B. Mauer), der Dämmfähigkeit des Paneels sowie der ruhenden Zwischenschicht, d.h. dem Raum zwischen der Gebäudehülle und der Fassade, werden durch die gezielte Bewegung (Öffnen, Ausrichten, Schließen) der erfindungsgemäßen Fassade Energiekennwerte erreicht, die bisher nicht möglich waren.

Von besonderem Vorteil für die sinngemäße Funktion der erfindungsgemäßen Fassade ist, wenn diese durch ein Bewegungssystem jeweils an die bestehenden Witterungsverhältnisse angepasst wird. Anders als bei bekannten Systemen ist es von besonderem Vorteil dass die Reaktionszeit der Ansteuerung in solch einer Schnelligkeit erfolgt, dass keine unnötigen Verluste entstehen und keine potentiellen Gewinne ungewollt ausgesperrt werden. Dies wird durch eine Steuerung erreicht, die über geeignete Sensoren Umweltgrößen aufnimmt und auswertet und eine entsprechende Bewegung des Systems auslöst.

Die kurzfristige Anpassung der günstigen Paneelstellungen ist von besonderem Vorteil, Insbesondere bei teilweise bewölktem Wetter, Wind etc. Wird nicht ausreichend schnell gesteuert, so wird Energie abgehalten oder zu hohe Verluste zur falschen Zeit zugelassen. Je kurzfristiger die Steuerung reagiert, um so höher sind die bei wechselhaftem Wetter erzielbaren Erträge und um so größer ist der Einsatzbereich der Fassade.

In einer bevorzugten Ausführungsform wird die Einstrahlungsleistung sowie die Lufttemperatur und gegebenenfalls eine Temperatur der Wand als Eingangsgröße zur Regelung herangezogen. Eine geeignete Steuerung berechnet die zu erwartenden Energieströme, vergleicht diese mit temporären Zielwerten und veranlasst die notwendige Bewegung der Teilelemente des Fassadensystems.

Bei der Erfindung ist es von besonderem Vorteil, dass insbesondere auf die Umkehrungen der Richtung der Energieströme an der, mit der erfindungsgemäßen Fassade versehenen Gebäudeoberfläche eine Steuerantwort in Form einer geeigneten Paneelbewegung innerhalb eines gewissen Zeitraums auftritt. Bevorzugt beträgt dieser Zeitraum weniger als 30 Minuten. Besonders bevorzugt beträgt diese Reaktionszeit weniger als 15 min. Die notwendige Kürze dieser Reaktionszeit ist u.a. vom Standort und vom Verwendungszweck des beaufschlagten Gebäudes und somit dem Zielwert abhängig.

In einer bevorzugten Ausführungsform ist die Reaktionszeit der Steuerung auf ein Witterungsereignis, das eine Änderung der Strömungsrichtung der Wärmeströme an der Oberfläche der "Kernwand" auslösen würde unter 5min.

Da das Fassadenelement schwenkbare Paneele aufweist, wird ein Raum zwischen den Paneelen und der Gebäudewand geschaffen, der bei Bedarf geöffnet und geschlossen werden kann. Durch die Nutzung der Eigenschaften der abgeschlossenen, beruhigten Luft bei geschlossenem Paneel wird der Gesamtwirkungsgrad massiv erhöht.

Durch geeignete Ausgestaltung bildet dieser Raum im geschlossenen Zustand gute Dämmeigenschaften aus, und erlaubt andererseits im geöffneten Zustand den Energieaustausch. Die Energieübertragungsarten im geschlossenen Spalt setzen sich aus Leitung, Strahlung und Transport = Konvektion zusammen. Um Strahlungsverluste zu minimieren kann die Paneelinnenseite geeignet gestaltet sein. Um Konvektionsverluste zu minimierten ist die Ausgestaltung des Zwischenraums geeignet auszuführen. Die Erhöhung der Dämmwirkung des Spalts wird erreicht in dem der Luftaustausch unterbunden wird.

Jedenfalls ist die Spaltbreite dieses Zwischenraums nicht zu groß zu wählen. Die thermodynamisch optimale Breite eines senkrechten ruhenden Luftspalts liegt bei ca. 4cm. Durch geeignete Gestaltung des Zwischenraums kann dieser Wert aber variieren. Spaltbreiten zwischen begrenzenden Elementen über 30cm werden als nicht mehr günstig betrachtet. Wird der Spalt größer, kann man dieses Optimum durch Verwendung weiterer Trennschichten, die entweder an der Wand oder an den Paneelen angeordnet sind, verbessern. Die an der Wand angeordnete Variante sollte logischer Weise für die Einstrahlung maximal durchlässig sein. Dies ist bei der an den Paneelen angeordneten Variante nicht unbedingt erforderlich.

Die Optimierung des Spaltmaßes ist günstig aber nicht unbedingt erforderlich. In einer erfindungsgemäßen Ausführung wird auf die optimale Ausprägung des Spaltmaßes des geschlossenen Paneels verzichtet und das bewegliche Paneel so nahe an die Kernwand herangeführt, dass dieses zumindest lokal anliegt. Der minimale Abstand des variablen Luftraums kann somit auch lokal 0 sein. In einer weiteren erfindungsgemäßen Ausführung wird der Luftraum im geschlossenen Zustand minimiert und durch die elastische Ausgestaltung der Innenseite der Paneele eine ausreichende Konvektionsbehinderung erreicht, z.B. durch lokales Anliegen der Paneelinnenseite an der Kernwand. Die Ausführung der Paneelinnenwand kann auch in solcher Art erfolgen, dass hierbei gezielt kleine beruhigte Lufträume/ Hohlräume entstehen. Die Ausführungen zur möglichen Gestaltung der Raum begrenzenden Fassadenelemente gelten hier sinngemäß.

Alternativ oder zusätzlich kann bei der Erfindung vorgesehen sein, dass zwischen den Paneelen und der Gebäudewand den Raum begrenzende Fassadenelemente angeordnet sind. Bei diesen Fassadenelementen kann es sich um ebene Platten handeln, welche von der Gebäudewand beabstandet sein, aber an dieser auch anliegen können. In dem Fall, in welchem die Platten von der Gebäudewand beabstandet sind, kann der zwischen den Platten und der Gebäudewand gebildete Raum bei Bedarf geöffnet und geschlossen werden.

Bei der Erfindung ist bevorzugt, wenn der Raum in Teilräume getrennt ist oder trennbar ist wobei des Weiteren bevorzugt ist, wenn die Teilräume eine vertikal oder horizontal ausgerichtete Längserstreckung aufweisen. Ebenso kann es für manche Anwendungen zielführend sein, wenn Teilräume in kompakter Form (Wabenform, Kuppelform etc.) ausgeführt werden.

Dies ist beispielsweise dadurch möglich, dass diese Fassadenelemente eine wellenförmige, trapezförmige, dreieckförmige oder ähnlich geformte Querschnittsform aufweisen, welche mit ihren der Gebäudewand zugewandten Ausformungen an dieser anliegen. Ebenso kann es vorteilhaft sein, diese Elemente derart auszuführen dass diese an den Paneelen temporär anliegen. So können diskrete Kanäle geschaffen werden, die bei geschlossenen Teilräumen isolierende Luftpolster einschließen und bei geöffneten Teilräumen Konvektionskanäle ausbilden können.

Eine weitere Ausbildungsform besteht darin, dass zusätzliche Elemente an den Paneelen an der Innenseite befestigt und von diesen beabstandet sind, und diese die Schwenkbewegung mit den Paneelen mitmachen.

Die vertikale Erstreckung ist vorteilhaft, wenn gezielt Konvektion zugelassen wird, um z.B. ein Wärmeträgermedium (z.B. Luft) für einen vorzugsweise oben angeordneten Wärmetauscher zu erwärmen. Wenn die Konvektion minimal gehalten werden soll, wird die Ausrichtung horizontal erfolgen, um kleine beruhigte Räume zu schaffen.

Diese kleinen, transparent überdeckten Räume dienen in erster Linie der Verhinderung von Windverlusten und der Maximierung der Nutzung der eingestrahlten Sonnenenergie. Dies funktioniert am besten, wenn die Kanäle horizontal angeordnet und nicht geöffnet sind, da in diesem Fall die Konvektion minimiert wird. Durch kleine Öffnungen oder entsprechende Materialgestaltung sollte sichergestellt werden, dass die Wand diffusionsoffen bleibt, Feuchtigkeit also entweichen kann. Auch bei geöffneten Paneelen sind die der Wand zugewandten Kleinräume im Wesentlichen unverändert geschlossen. Diese Ausführung wird besonders an Wänden mit geringerem Strahlungsangebot angewendet werden, mit dem Effekt der Maximierung des Energieeintrags.

Werden die Kanäle vertikal angeordnet ist es sinnvoll, diese an der der Mauer zugewandten Fläche bei geschlossenem Paneel auch zu schließen. Bei geöffnetem Paneel und Sonneneinstrahlung werden die vertikalen Kanäle eine mitunter starke Konvektion ausbilden, die dazu genutzt werden kann, dass am oberen heißeren Ende die Energie zur zusätzlichen Erwärmung eines Trägermediums verwendet werden kann. (bevorzugt an gut bestrahlten Südseiten, z.B. zur zusätzlichen Warmwassergewinnung)
Bei der Erfindung sind unterschiedliche Ausführungsformen bzw. Kombinationen möglich. Bei einer Variante wird der Raum zwischen den Paneelen, der Gebäudewand und einer geeigneten Abdichtung am äußeren Umfang der Fassade gebildet. Wenn die Paneele geschlossen sind, dann ist eine Konvektion bzw. ein Luftaustausch mit der Umgebung nicht möglich, ebenso wenig wie eine Sonneneinstrahlung auf die Gebäudewand oder die Abstrahlung von Wärme von der Gebäudewand an die Umgebung. Es wird auf diese Weise eine gute zusätzliche Isolierung der Gebäudewand geschaffen.

Wenn die Paneele geöffnet sind, ist sowohl ein Strahlungsaustausch als auch ein Luftaustausch mit der Umgebung möglich, was je nach den gegebenen Witterungsbedingungen eine Erwärmung oder Kühlung der Gebäudewand ermöglicht.

Bei einer anderen Variante sind zwischen den Paneelen und der Gebäudewand zusätzliche Fassadenelemente angeordnet, welche bevorzugt transparent sind und zwischen der Gebäudewand und sich einen Raum definieren, der entweder immer im Wesentlichen geschlossen aber diffusionsoffen ist oder bei Bedarf ebenfalls geöffnet und geschlossen werden kann, und eine Konvektion zu ermöglichen. Die Paneele dienen bei dieser Ausführungsform wiederum zur Steuerung des Strahlungsaustausches, wogegen mit den transparenten Fassadenelementen die Konvektion beeinflusst werden kann. Zusätzlich kann mit den Paneelen wie vorstehend beschrieben ein weiterer Raum geschaffen werden, der im geschlossenen Zustand der Paneele eine zusätzliche Isolierschicht bildet.

Es ist in jedem Fall auch bei dieser Ausführungsform vorteilhaft, wenn die seitlichen, oberen und unteren Enden der Paneelfläche bzw. Fassadenfläche derart ausgeführt sind, dass sie bei geschlossenen Paneelen einen eingeschlossenen, nach außen abgedichteten Zwischenraum bilden.

Innerhalb des Raumes, der von den Paneelen und Mauer ausgebildet wird, können zusätzlich eine Luftströmung bzw. Konvektion behindernde oder lenkende Elemente angeordnet werden.

Es versteht sich, dass die Paneele bei allen Ausführungsform in der Erfindung selbst gut isolierend ausgeführt sein sollten, beispielsweise einen Wärme isolierenden Kern oder Wärme isolierenden Schichten aufweisen. Als dämmend werden in diesem Zusammenhang Paneele bezeichnet wenn sie einen Wärmedurchgangswiderstand von > 1m²K/W aufweisen. Höhere Dämmwerte sind naturgemäß günstig.

In einer erfindungsgemäßen Ausführungsform wird das Paneel mit hoch dämmenden Materialien (Lamda < 0,03) ausgeführt. Günstige Materialstärken der erfindungsgemäßen Ausführung der Paneele bewegen sich zischen 2cm und 8cm.

In einer weiteren erfindungsgemäßen Ausführung wird an der Innenseite der Paneele eine Mehrzahl parallel verlaufender, dünner, beabstandeter Schichten ausgeführt, die den Zwischenraum in eine Anzahl Teilräume unterteilen. Ein Effekt dieser Anordnung ist, dass diese in Längsrichtung durchstrahlt werden kann und somit nur minimale Beschattungsverluste der Wand aufweist. Üblicherweise wird sich die Ebene der Zwischenschichen parallel zur Paneelfläche erstrecken.

Diese Zwischenräume dieser Ausführungen können immer strömungsbehindernd oder abgedichtet oder nur im geschlossenen Fall strömungsbehindernd bzw. dichtend ausgeführt sein. Die seitliche Abdichtung dieser Schichten erfolgt günstigerweise in transparenter Ausführung. In einer weiteren Ausführung könnten diese Zwischenräume mit einem Gas mit geringerer Wärmeleitfähigkeit gefüllt sein.

Eine hohe Absorptionsfähigkeit der Kernwand ist sehr stark proportional zur erzielbaren Wirkung bei der Nutzung der erfindungsgemäßen Fassade im Winter und somit von großer Bedeutung. Die Oberfläche der Wand sollte bei der Erfindung eine möglichst gute Absorption für Strahlung aufweisen, um möglichst viel Sonnenlicht absorbieren zu können. Ein Emissionsgrad von ε > 0,6 ist bevorzugt. Gute Ergebnisse werden aber bereits ab ε > 0,5 erzielt. In einer bevorzugten erfindungsgemäßen Ausführung werden durch geeignete Ausgestaltung/ Beschichtung der Kernwand Absorptionskoeffizienten über 0,85 erzielt, was sich für den Wirkungsgrad positiv auswirkt. Ideale Werte werden bei ε > 0,9 erzielt.

Für die Sommerwirkung, d.h. die Beschattung, und/oder tageszeitliche Dämmung und nächtliche Öffnung zur Wärmeabstrahlung, sowie gegebenenfalls die Reflexion der Sonnenstrahlen vom Gebäude weg durch Verwendung der reflektierenden Innenfläche durch starkes Überdrehen der Paneele, ist die Absorptionsfähigkeit der darunter liegenden Oberfläche nur von untergeordneter Bedeutung.

Weitere alternative Varianten und Kombinationen sind natürlich ebenso möglich. Wenn das transparente Fassadenelement gemäß einer bevorzugten Ausführungsform der Erfindung für Strahlung größerer Wellenlängen weniger durchlässig ist als für Strahlung kleiner Wellenlängen, kann das vornehmlich kurzwellige Licht der Sonne ungehindert die Wand erwärmen, wogegen die langwellige Abstrahlung der erwärmten Mauer aber reduziert wird. Dies führt zu einer Verstärkung des Heizeffekts im Winter, vornehmlich für Wandlagen mit geringerer Einstrahlung.

Weitere bevorzugte Ausführungsformen der Erfindung sind Gegenstand der übrigen Unteransprüche.

Weitere Merkmale und Vorteile der Erfindung ergeben sich aus der nachfolgenden Beschreibung bevorzugter Ausführungsbeispiele der Erfindung unter Bezugnahme auf die angeschlossenen Zeichnungen.

Es zeigt:
Fig. 1 eine erste Ausführungsform einer erfindungsgemäßen Fassade mit geöffneten Paneelen von der Seite,
Fig. 2 die Ausführungsform von Fig. 1 mit geschlossenen Paneelen von der Seite,
Fig. 3 eine weitere Ausführungsform einer erfindungsgemäßen Fassade mit geschlossenen Paneelen von der Seite,
Fig. 4 eine dritte Ausführungsform einer erfindungsgemäßen Fassade mit geöffneten Paneelen leicht schräg von hinten gesehen,
Fig. 5 ein Detail einer weiteren Ausführungsform mit geschlossenen Paneelen von der Seite,
Fig. 6 bis 11 die Darstellung der Funktion im Wärme- und Kühlbetrieb (Winter und Sommerbetrieb) in verschiedenen Paneelstellungen und
Fig. 12 bis 19 verschiedene Varianten der Ausgestaltung von Paneelen und dem Raum zwischen den Paneelen und der Gebäudewand.

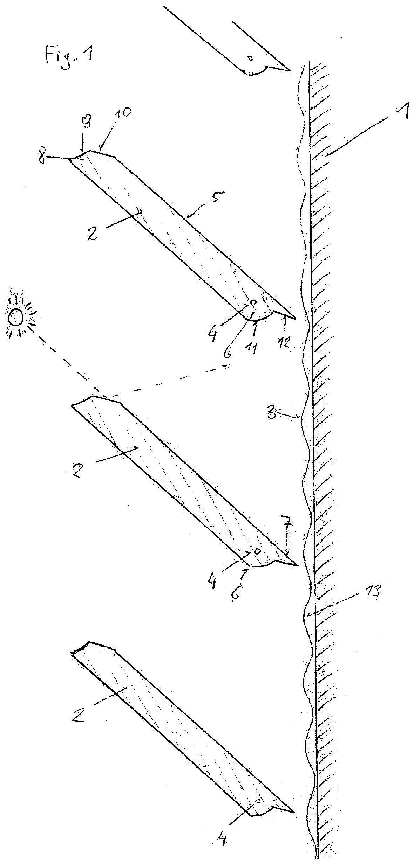

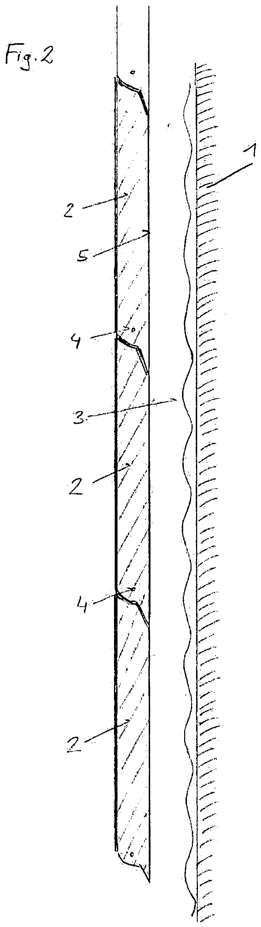

Fig. 1 und 2 ist eine Fassade an einer Gebäudewand 1 dargestellt, welche im dargestellten Ausführungsbeispiel Paneele 2 als erstes Fassadenelement und zusätzlich eine wellenförmige Platte 3 als weiteres Fassadenelement aufweist. Die Paneele 2 sind um horizontale Achsen 4 zwischen der in Fig. 1 dargestellten Stellung und der in Fig. 2 dargestellten Stellung verschwenkbar. Grundsätzlich ist es auch denkbar, dass die Paneele 2 noch weiter als Fig. 1 dargestellt geöffnet werden, bis sie beispielsweise eine horizontale oder nach unten hängende Stellung einnehmen, wenn sie weiter als 90° gegen den Uhrzeigersinn verschwenkt werden.

Die Paneele 2 sind bevorzugt an ihrer Innenfläche 5 verspiegelt oder reflektierend bzw. sehr hell, so dass Sonnenlicht, das zwischen die Paneele 2 einfällt und von der Wand 1 bzw. der Platte 3 auf die Innenfläche 5 reflektiert wird, nochmals zurück in Richtung Wand 1 reflektiert wird. Außerdem reflektiert eine verspiegelte Innenfläche 5 im geschlossenen Zustand der Paneele 2 gemäß Fig. 2 die Wärmestrahlung der Wand 1. Unter reflektierend wird bei der vorliegenden Erfindung eine Oberflächenstruktur und/oder Farbe verstanden, die einen möglichst geringen Emissionsgrad aufweist, was beispielsweise schon dadurch gegeben ist, wenn die Innenfläche 5 hell oder weiß beschichtet oder gestrichen ist. Außerdem ist es von Vorteil, wenn die Wand der Paneele 2 an der Innenfläche eine geringe thermische Leitfähigkeit besitzt.

Die Paneele 2 besitzen an ihrem unteren, der Achse 4 benachbarten Ende 6 einen Vorsprung 7. Dieser Vorsprung 7 hat im dargestellten Ausführungsbeispiel die Funktion, den Kontaktbereich zwischen dem unteren Ende 6 und dem oberen Ende 8 der Paneele 2 im geschlossenen Zustand gemäß Fig. 2 möglichst großflächig bzw. lang zu gestalten, da die Abdichtung und Isolierung dann besser ist. Die Paneele 2 weisen dazu an ihrem oberen Ende 8 zwei Kontaktflächen 9 und 10 und an ihrem unteren Ende 6 zwei Kontaktflächen 11 und 12 auf, mit welchen benachbarte Paneele 2 im geschlossenen Zustand aneinander anliegen. Dies kann erfolgen indem die Paneele 2 einen oberen und unteren Rand 6, 8 aufweisen, dessen Flächen 9,10; 11, 12 kongruent geformt sind. Die Fläche 10 weist außerdem noch die zusätzliche Funktion auf, dass Sonnenlicht, welches auf diese Fläche auftritt, in Richtung zur Wand 1 reflektiert wird, so dass die auf die Wand 1 auftreffende Menge an Sonnenlicht noch etwas erhöht werden kann.

Die wellenförmige Platte 3 ist transparent, so dass sie von Sonnenlicht möglichst verlustfrei durchdrungen werden kann. Durch geeignete Materialwahl kann die Platte 3 so ausgeführt sein, dass sie von kurzwelligerem Sonnenlicht möglichst verlustfrei durchdrungen werden kann, langweiligere Wärmestrahlung von der Wand 1 nach außen aber möglichst nicht durchlässt und reflektiert. Gegebenenfalls kann die Platte 3 auch entsprechend oberflächenbeschichtet oder nach außen entspiegelt und/oder zur Wand 1 hin verspiegelt sein.

Durch die wellenförmige Geometrie der Platte 3 werden horizontal ausgerichtete, diskrete Kanäle 13 gebildet, die Luftpolster einschließen, welche eine zusätzliche Isolierschicht bilden. Diese Kanäle 13 können seitlich entweder fix verschlossen sein oder durch einen geeigneten Mechanismus geöffnet und geschlossen werden, um bei Bedarf einen Luftaustausch durchführen zu können. Ebenso kann für die Platte 3 ein Material mit teildurchlässiger Eigenschaft verwendet werden oder es können an geeigneter Stelle Perforationen angebracht sein. Anstelle der wellenförmigen Geometrie, wie sie in Fig. 1 und 2 dargestellt ist, sind auch andere Querschnittsformen möglich, um beispielsweise trapezförmige, rechteckförmige oder dreieckförmige Kanäle zu bilden.

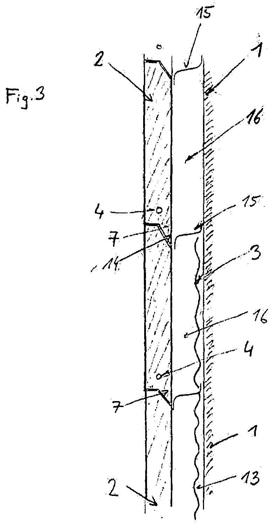

Die in Fig. 3 dargestellte Ausführungsform einer erfindungsgemäßen Fassade entspricht im mittleren und unteren Bereich im wesentlichen der in Fig. 1 und 2 dargestellten Ausführungsform, wobei jedoch zusätzlich Trennelemente 15 vorgesehen sind, welche den Raum 16 zwischen der Platte 3 und den Paneelen 2 in vertikal übereinander liegende Abschnitte unterteilt, so dass eine unerwünschte Luftströmung in vertikaler Richtung verhindert werden kann.

Die Trennelemente 15 sind entweder so elastisch, dass sie ausweichen, wenn die Spitzen 14 der Vorsprünge 7 beim Öffnen der Paneele 2 an ihnen vorbei gleiten, oder sie haben eine Geometrie, welche exakt an die kreisbogenförmige Bewegung der Spitzen 14 angepasst ist, so dass es zu keinem oder einem geringen mechanischen Kontakt zwischen den Spitzen 14 und den Trennelementen 15 kommt.

Alternativ oder zusätzlich können an den Paneelen Trennelemente angeordnet sein, die mit den Paneelen 2 mitschwenken und im geschlossenen Zustand den Raum 16 zwischen der Platte 3 oder der Gebäudewand 1 und den Paneelen 2 in vertikal übereinander liegende Abschnitte unterteilen.

In Fig. 3 ist im oberen Abschnitt eine Ausführungsform der Erfindung dargestellt, bei der keine Platte 3 an der Wand 1 angebracht ist sondern ein abschließbarer Raum unmittelbar zwischen den Paneelen 2 und der Wand 1 gebildet wird.

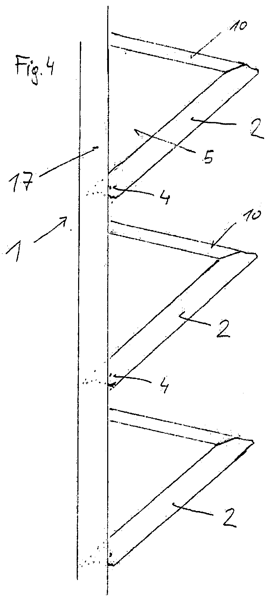

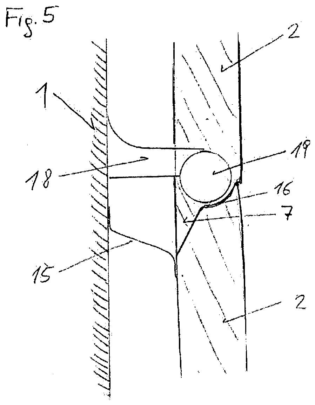

In den Fig. 4 und 5 ist eine weitere Ausführungsform einer erfindungsgemäßen Fassade dargestellt, welche ebenso wie die in Fig. 3 im oberen Abschnitt dargestellte Ausführungsform kein zusätzliches Fassadenelement in Form einer Platte 3 aufweist. Es ist in Fig. 4 und 5 zu sehen, dass die Fassade seitlich von Dichtelementen 17 abgeschlossen ist. Hinzu kommen in den Zeichnungen nicht dargestellte Dichtelemente am oberen und unteren Rand der Fassade. Mit diesem Dichtelementen kann zwischen der Wand 1, den Paneelen 2 und den Dichtelementen 17 an der Seite sowie am oberen und unteren Rand der Fassade ein abgeschlossener Raum geschaffen werden, der eine zusätzliche Isolierschicht bildet.

In den Dichtelementen am oberen und unteren Rand der Fassade können Be- und Entlüftungsöffnungen vorgesehen sein, um eine Be- und Entlüftung auch bei geschlossenen Paneelen 2 zu ermöglichen. Es können aber auch die Paneele 2 am oberen und unteren Rand, gegebenenfalls unabhängig von den übrigen Paneelen 2, geöffnet und geschlossen werden, um eine Be- und Entlüftung zu ermöglichen.

Es versteht sich, dass die Paneele 2 bei allen Ausführungsformen der Erfindung selbst gut isolierend ausgeführt sein können oder sollten, beispielsweise einen Wärme isolierenden Kern oder Wärme isolierende Schichten aufweisen, um eine möglichst gute Isolierung zu schaffen.

Bei der Ausführungsform von Fig. 5 ist ein Rahmenelement 18 zu sehen, welches an der Wand 1 montiert ist und an welchem die Paneele 2 schwenkbar befestigt sind. In eine Welle 19 der Paneele 2 kann ein Antriebssystem integriert sein, welches zusätzlich auch einen Sensor zur Erfassung des Öffnungswinkels der Paneele 2 aufweisen kann. In dieses Antriebssystem bzw. in jedes andere Antriebssystem kann ein elastisches Ausgleichselement integriert sein.

Das elastische Ausgleichselement ist einerseits für eine kostengünstige Ausführung und andererseits für eine gute Abdichtung zwischen den Paneelen 2 im geschlossenen Zustand von Vorteil. Ohne das elastische Ausgleichselement müssten sich alle Paneele 2 exakt gleich bewegen und die Antriebe und Dichtelemente präzise ausgeführt werden. Wärmedehnungen etc dürften nur einen geringen tolerierbaren Einfluss haben. Insbesondere im geschlossenen Zustand sind auch kleine Abweichungen wahrnehmbar, bzw. zeigen Auswirkungen. Wenn man jedoch ein elastisches Ausgleichselement, das einige oder mehrere Winkelgrade Abweichung erlaubt, in den Antrieb bzw. den Antriebsstrang jedes Paneels 2 integriert, so können der Antrieb, die Gleichlaufkomponenten sowie Dichtelemente 16 zwischen den Paneelen 2 einfacher und daher günstiger ausgeführt werden. Die einzelnen Paneele 2 können mit Vorspannung geschlossen werden, so dass die Paneele 2 an ihrem oberen und unteren Rand 6, 8 mit der durch das Ausgleichselement vorgegebenen Kraft aneinander gedrückt werden. Geringe Winkelfehler, die sich durch ungenaue Einstellung oder Wärmedehnung ergeben, können so ausgeglichen werden. Es ist auch möglich, dieses Ausgleichselement nur in eine Richtung elastisch und mit ansteigender Steifigkeit auszuführen. Alternativ oder zusätzlich ist es auch möglich, dass der Antrieb selbst über ein elastisches Ausgleichselement ortsfest gelagert ist.

Es versteht sich, dass diese elastischen Ausgleichselemente zwar vorteilhafter Weise vorhanden sind aber nicht unbedingt sein müssen.

Um die Energieeffizienz zu verbessern, kann die erfindungsgemäße Fassade eine Steuerung aufweisen, welche in Abhängigkeit von der Intensität der Sonneneinstrahlung einerseits und/oder von der Temperatur der Gebäudewand 1 und/oder des Gebäudeinneren und/oder der Umgebungstemperatur andererseits, den Antrieb für das Öffnen und Schließen des zwischen den Paneelen 2 und der Wand 1 oder der Platte 3 bzw. den Paneelen 2 und der Wand 1 gebildeten Raumes 13, 16 ansteuert. Weiters können Sensoren für Regen und/oder Wind vorgesehen sein, welche für die Steuerung relevante Parameter liefern können.

Die Ansteuerung erfolgt beispielsweise so, dass ein Steuermodul aus Klimadaten die günstige Paneelstellung ermittelt und die Paneele 2 entsprechend ansteuert. Dabei wird in einer erfindungsgemäßen Ausführung der zu erwartende Wärmestrom errechnet. In einer erfindungsgemäßen Ausführung kann das System ermitteln ob Wärmebedarf (Wintermodus) oder Kühlbedarf (Sommermodus) vorliegt, und die Zielparameter entsprechend anpassen.

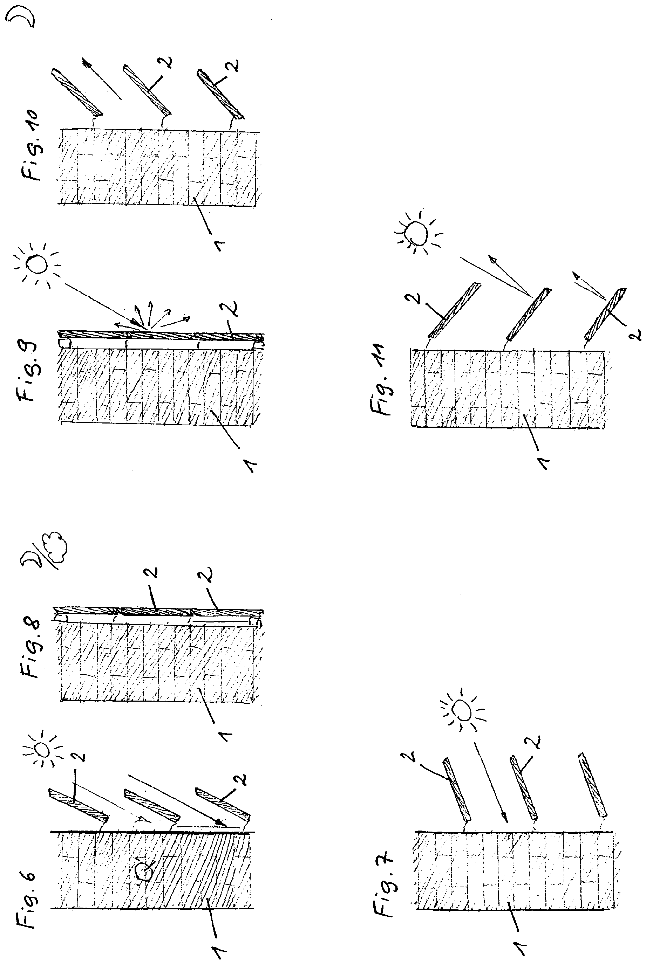

Im Wintermodus soll Energie gesammelt werden. Übersteigen die zu erwartenden Energiegewinne die zu erwartenden Verluste so öffnet das Fassadensystem. Die Elemente werden derart ausgerichtet und nachgeführt, dass der Eigenschatten der Paneele 2 minimal wird (Fig. 6 und 7). Überwiegen die Verluste so schließt das System und bildet eine ruhende, dämmende Schicht aus. (Fig. 8)

Im Sommermodus soll Wärmeenergie abgegeben werden. Dazu verbleibt das System während der Zeit potentieller Energieeinträge, also bei Tag bzw. Sonneneinstrahlung im geschlossenen Dämmmodus (Fig. 9) und öffnet wenn Energie abgegeben werden kann. Dies ist üblicherweise in der Nachtzeit (Fig. 10). Durch die Speicherwirkung des Gesamtsystems (Fassadensystem + Wand) wird die Energie des Tages in kühleren Zeiten abgegeben. In einer erfindungsgemäßen Ausführung wird zusätzlich die im Regelfall helle, reflektierende Innenseite der Paneele genutzt um die Einstrahlleistung sogleich wieder zurückzustrahlen (Fig. 11).

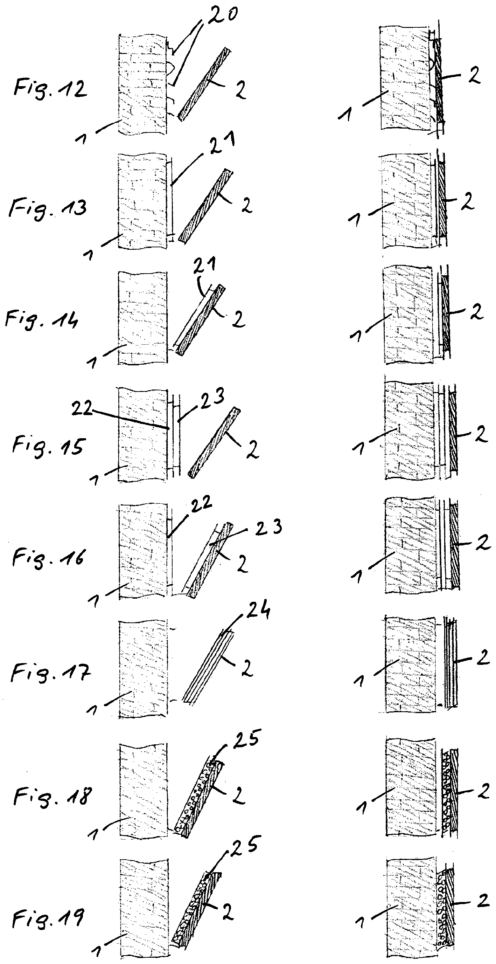

In den Fig. 12 bis 19 sind Verschiedene erfindungsgemäße Ausführungsformen von Fassaden dargestellt. Hierbei zeigt die linke Darstellung jeweils eine geöffnete Anordnung, die rechte Darstellung diese in geschlossenem Zustand.

In Fig. 12 weist die erfindungsgemäße Ausführung bewegliche, gesteuerte Paneele 2 auf, die vor einer Wand 1 beabstandet beweglich angebracht sind, und bei der im Zwischenraum unterschiedliche Varianten von Leit- Dämm- und/oder Trennelementen 20 angebracht sind.

In Fig. 13 weist die erfindungsgemäße Ausführung bewegliche, gesteuerte Paneele 2 auf, die vor einer Wand 1 beabstandet beweglich angebracht sind, und bei der im Zwischenraum ein weiteres (transparentes) Trennelement 21 an der Wand 1 angebracht ist.

In Fig. 14 ist dieses Isolierelement 21 am beweglichen Paneel 2 befestigt.

In Fig. 15 und 16 sind mehrere zusätzliche (transparente) Isolierelemente 22, 23 angebracht, die entweder alle an der Wand 1, alle am Paneel 2, oder an beiden angebracht sein können.

In Fig. 16 ist eine Mehrzahl dünner Isolierelemente 24 an der Innenseite des Paneels 2 befestigt. Diese Isolierelemente 24 sind in einer erfindungsgemäßen Ausführung etwa parallel zum Paneel 2 und werden mit diesem bewegt. Die Einstrahlung kann bei entsprechender Ausrichtung des Paneelsystems zwischen den Schichten zur Wand 1 durchdringen. Dadurch wird die Eigenbeschattung des Paneelsystems reduziert.

Die unterteilenden Isolierelemente oder -schichten 21 bis 24 können in einer Form ausgeführt sein, in der diese seitlich geöffnet oder teilgeöffnet sind. Sie können aber auch an einer, an mehreren oder allen Seiten durch eine, in günstigerweise transparent ausgeführten Gestaltung geschlossen sein. Werden in einer erfindungsgemäßen Ausführung alle Seiten geschlossen, so werden dauerhaft geschlossene Räume ausgebildet, die zur Erhöhung der Dämmwirkung in einer erfindungsgemäßen Ausführung mit einem Gas mit geringer Wärmeleitfähigkeit gefüllt werden können. Dadurch entstehen gestapelte flache Flächenelemente, die in Richtung der Ebenen strahlungsoffen sind, und normal zu den Ebenen der Isolierelemente 21 bis 24 eine verbesserte Dämmwirkung aufweisen. Somit sind die Eigenschaften minimaler Einstrahlungsbehinderung mit den Eigenschaften einer sehr guten Dämmung in günstiger Weise vereint.

In Fig. 18 weist die erfindungsgemäße Ausführung bewegliche, gesteuerte Paneele 2 auf, die vor einer Wand 1 beabstandet beweglich angebracht sind, und bei der an der der Wand 1 zugewandten Paneelseite eine elastische Schicht 25 ausgebildet ist. Diese kann beispielsweise aus offen- oder geschlossenzelligem, transparentem, transluzentem oder opakem, vorzugsweise geschäumtem Kunststoff ausgeführt sein. In einer weiteren erfindungsgemäßen Ausführung nach Fig. 18 wird dazu auch ein Paneel 2 ohne spezielle Dämmeigenschaften verwendet.

In allen Ausführungsformen sind im geschlossenen Zustand des Fassadensystems die Zwischenräume zwischen der Wand 1 und den Isolierelementen 21 bis 25 bevorzugt durch geeignete, an den Paneelen 2 und/oder der Wand 1 befestigte Trennelemente 15, 20 unterteilt, um Konvektionsverluste so weit wie möglich zu vermeiden.

In Fig. 19 ist eine erfindungsgemäße Ausführung dargestellt, bei der an der Innenseite der Paneele 2 eine Schicht 25 wie jene von Fig. 18 ausgebildet ist, die günstigerweise elastisch ist. In dieser Ausführung ist Konstruktion in der Art von der Wand 1 beabstandet, dass sich die Innenseite der Schicht 25 im geschlossenen Zustand zumindest teilweise an der Wand anlegt und zumindest partiell abdichtet und auf diese Wiese beispielsweise Konvektionsverluste vermeidet. Eine geeignete Ausgestaltung der Oberfläche kann zusätzlich Hohlräume mit dem Wandbildner ausbilden.

## Patentansprüche

1. Fassade an einer Gebäudewand (1) mit beweglichen Paneelen (2), die mittels einer Steuerung, vorzugsweise um eine vertikale oder horizontale Achse (4), verschwenkbar sind, wobei zwischen der Gebäudewand (1) und den Paneelen (2) ein Raum gebildet ist, der geöffnet und geschlossen werden kann, und wobei die verschwenkbaren Paneele (2) gut isolierend ausgeführt sind, **dadurch gekennzeichnet dass** eine Steuerung vorgesehen ist, die aus Klimadaten die günstigste Paneelstellung ermittelt, wobei die Steuerung ermittelt, ob Wärmebedarf und somit Wintermodus oder Kühlbedarf und somit Sommermodus vorliegt, wobei im Wintermodus für den Fall, dass die zu erwartenden Energiegewinne die zu erwartenden Verluste übersteigen, die Paneele geöffnet werden, und die Paneele derart ausgerichtet und nachgeführt werden, dass der Eigenschatten der Paneele (2) minimal wird, wohingegen für den Fall des Oberwiegens der Verluste die Paneele (2) geschlossen werden und eine ruhende, dämmende Schicht ausgebildet wird.

2. Fassade nach Anspruch 1, **dadurch gekennzeichnet, dass** die verschwenkbaren Paneele (2) aus einem hoch dämmenden Material, die ein Lambda von kleiner als 0,03 aufweisen, ausgebildet sind.

3. Fassade nach Anspruch 1 oder 2, **dadurch gekennzeichnet, dass** im Sommermodus während der Zeit potentieller Energieeinträge die Paneele (2) im geschlossenen Dämmmodus verbleiben, und die Paneele (2) geöffnet werden, wenn Energie abgegeben werden kann.

4. Fassade nach Anspruch 1, 2 oder 3, **dadurch gekennzeichnet, dass** die Reaktionszeit der Steuerung in solcher Schnelligkeit erfolgt, dass keine unnötigen Verluste entstehen und keine potentiellen Gewinne ausgesperrt werden, wobei die Steuerung über geeignete Sensoren Umweltgrößen aufnimmt und auswertet und eine entsprechende Bewegung des Systems auslöst

5. Fassade nach einem der Ansprüche 1 bis 4, **dadurch gekennzeichnet, dass** zwischen den Paneelen (2) und der Gebäudewand (1) einen Raum (13) begrenzende Fassadenelemente (3) oder Trennelemente (21 bis 25) angeordnet sind, durch die der Raum in Teilräume getrennt oder trennbar ist.

6. Fassade nach Anspruch 5, **dadurch gekenntzeichnet,** dass die Fassadenelemente (3) transparent und vorzugsweise ver- oder entspiegelt sind.

7. Fassade nach einem der Ansprüche 1 bis 6, **dadurch gekennzeichnet, dass** die Oberfläche der Paneele (2) auf der im geschlossenen Zustand der Gebäudewand (1) zugewandten Fläche (5) Strahlung reflektierend ist.

8. Fassade nach einem der Ansprüche 1 bis 7, **dadurch gekennzeichnet, dass** die Paneele (2) gegeneinander dicht verschließbar sind.

9. Fassade nach einem der Ansprüche 1 bis 8, **dadurch gekennzeichnet, dass** am oberen und/oder unteren Rand (6,8), die kongruent geformt sind, sowie gegebenenfalls an einem oder beiden seitlichen Rändern eine Dichtung, beispielsweise eine Labyrinthdichtung oder eine elastische Dichtung (16), angeordnet ist.

10. Fassade nach einem der Ansprüche 1 bis 9, **dadurch gekennzeichet** dass der Raum (13, 16) in wenigstens zwei vertikal übereinander liegende Abschnitte unterteilt ist.

11. Fassade nach einem der Ansprüche 1 bis 10, **dadurch gekennzeichnet, dass** am oberen Rand einer im geschlossenen Zustand der Gebäudewand (1) zugewandten Fläche (5) das Paneel eine zum oberen Rand hin nach außen abgeschrägte Fläche (10) aufweist.

12. Fassade nach einem der Ansprüche 1 bis 11, **dadurch gekenntzeichnet,** dass zum Verschwenken der Paneele (2) ein Antrieb vorgesehen ist, und dass in einem Antriebsstrang zwischen dem Antrieb und der jeweiligen Paneele (2) ein elastisches Ausgleichselement angeordnet ist.

13. Fassade nach einem der Ansprüche 1 bis 12, **dadurch gekennzeichnet, dass** zum Verschwenken der Paneele (2) ein Antrieb vorgesehen ist und dass der Antrieb über ein elastisches Ausgleichselement ortsfest gelagert ist,

14. Verfahren zum Steuern der wärmetechnischen Eigenschaften einer Fassade an einer Gebäudewand (1) nach einem der Ansprüche 1-13, mit beweglichen, vorzugsweise um eine vertikale oder horizontale Achse (4) verschwenkbaren, Paneelen (2), **dadurch gekennzeichnet, dass** ein zwischen der Gebäudewand (1) und Fassadenelementen (2, 3) gebildeter Raum (13, 16) geöffnet wird, wenn eine Konvektion und/oder Strahlungsaustausch mit der Umgebung erwünscht ist und abgeschlossen wird, wenn eine Konvektion und/oder Strahlungsaustausch mit der Umgebung unerwünscht ist.

15. Verfahren nach Anspruch 14, **dadurch gekennzeichnet, dass** die Bewegung der Paneele (2) automatisch gesteuert, kurzfristig auf Wetterereignisse reagierend, erfolgt.

## Claims

1. A façade on a building wall (1), having movable panels (2), which are pivotable around a preferably vertical or horizontal axis (4) by means of a control, wherein
a space, which may be opened and closed, is formed between the building wall (1) and the panels (2), and wherein
the pivotable panels (2) are designed to be highly insulating;
**characterized in that**
a control is provided, which identifies the most suitable panel position from climate data, the control identifying whether there is a heat demand and thus winter mode is on or whether there is a cooling demand and thus summer mode is on, where, in winter mode, the panels are opened in the case when the expected energy gain exceeds the expected losses and the panels are arranged and tracked in such a way as to minimize the self-shadow of the panels (2), whereas the panels (2) are closed and a static insulating layer is formed in the case when the losses outweigh the gains.

2. The façade according to claim 1, **characterized in that** the pivotable panels (2) are formed from a highly insulating material having a lambda of less than 0.03.

3. The façade according to claim 1 or 2, **characterized in that** in summer mode the panels (2) remain in closed insulation mode during times of potential energy gains and the panels (2) are opened when energy can be released.

4. The façade according to claim 1, 2 or 3, **characterized in that** the reaction time of the control is as fast as to avoid unnecessary losses and not to shut out potential gains, with the control receiving and evaluating environmental parameters from suitable sensors and triggering a corresponding motion of the system.

5. The façade according to any of the claims 1 to 4, **characterized in that** façade elements (3) or separating elements (21 to 25), which delimit a space (13) and by which the space is separated or separable into subspaces, are arranged between the panels (2) and the building wall (1).

6. The façade according to claim 5, **characterized in that** the façade elements are transparent and preferably have a reflective or anti-reflective coating.

7. The façade according to any of the claims 1 to 6, **characterized in that** the surface of the panels (2) is radiation-reflective on the face (5) facing the building wall in the closed state.

8. The façade according to any of the claims 1 to 7, **characterized in that** the panels (2) can be tightly closed against each other.

9. The façade according to any of the claims 1 to 8, **characterized in that** a seal, for example a labyrinth seal or an elastic seal (16), is arranged on the upper and/or lower edge (6, 8), which are congruently shaped, and optionally on one or both lateral edges.

10. The façade according to any of the claims 1 to 9, **characterized in that** the space (13, 16) is separated into at least two vertically overlapping sections,

11. The façade according to any of the claims 1 to 10, **characterized in that,** on the upper edge of a face (5) facing the building wall (1) in the closed state, the panel has a face (10) that is outwardly inclined towards the upper edge.

12. The façade according to any of the claims 1 to 11, **characterized in that** a drive unit is provided for pivoting the panels (2) and that an elastic compensation element is arranged in each power train between the drive unit and the respective panels (2).

13. Façade selon une des revendications 1 à 8, **caractérisée en ce que** une unité d'entraînement est prévue pour pivoter les panneaux (2) et que ladite unité de propulsion est montée de façon fixe à travers un élément élastique de compensation.

14. Procédé pour commander les caractéristiques thermo-techniques d'une façade sur un mur (1) d'un batiment selon une des revendications 1 à 13 moyennant des panneaux (2) mobiles, qui sont pivotables de preference autour d'un axe vertical ou horizontal, **caractérisé en ce que** un espace (13, 16) formé entre le mur (1) du bâtiment et des éléments (2, 3) de façade est ouvert quand une convection et/ou un échange de radiation avec l'environnement est souhaité(e), et est fermé quand une convection et/ou un échange de radiation avec l'environnement n'est pas souhaité(e).

15. Procédé selon la revendication 14, **caractérisé en ce que** le mouvement des panneaux (2) est effectué de façon automatique et réagissant rapidement à des évènements météorologiques.

## Revendications

1. Façade sur un mur (1) d'un bâtiment, avec des panneaux (2) mobiles, qui sont pivotables de préférence autour d'un axe vertical ou horizontal par une commande,
un espace étant formé entre le mur (1) du bâtiment et les panneaux (2), qui peut être ouvert et fermé, et
les panneaux (2) pivotables étant configurés pour bien isoler,
**caractérisée en ce que** une commande est prévue, qui établit la meilleure position des panneaux parmi des données climatiques, la commande établissant s'il existe un besoin de chaleur et donc un mode d'hiver ou un besoin de refroidissement et donc un mode d'été, et **en ce que**
dans le cas du mode d'hivers, les panneaux sont ouverts si le gain énergétique attendu est supérieur aux pertes attendues, et les panneaux sont orientés et ajustés de telle sorte que l'ombre propre aux panneaux (2) devient minimale, tandis que si les pertes sont supérieures, les panneaux (2) sont fermés et une couche statique, isolante est formée.

2. Façade selon la revendication 1, **caractérisée en ce que** les panneaux (2) pivotables sont formés d'un matériel fortement isolant avec un lambda de moins de 0,03.

3. Façade selon la revendication 1 ou 2, **caractérisée en ce que** dans le mode d'été, pendant la période de gain énergétique potentiel, les panneaux (2) restent dans un état isolant fermé, et **en ce que** les panneaux (2) sont ouverts quand de l'énergie peut être libérée.

4. Façade selon la revendication 1, 2 ou 3, **caractérisé en ce que** le temps de réaction de la commande est tellement réduit qu'aucune perte inutile ne se produit et de gains potentiels ne sont pas exclus, la commande recevant et évaluant des paramètres environnementaux captés par des capteurs adaptés et déclenchant un mouvement respectif du système.

5. Façade selon une des revendications 1 à 4, **caractérisée en ce que** des éléments de façade (3) ou des éléments séparateurs (21 à 25) sont positionnés entre les panneaux (2) et le mur (1) du bâtiment, moyennant lesquels l'espace est divisé ou divisible en portions d'espace.

6. Façade selon la revendication 5, **caractérisée en ce que** les éléments de façade (3) sont transparents et de préférence étamés ou non étamés.

7. Façade selon une des revendications 1 à 6, **caractérisée en ce que** la surface des panneaux (2) sur la face (5), qui dans l'état fermé se trouve vis-à-vis du mur (1) du bâtiment, reflète des radiations.

8. Façade selon une des revendications 1 à 7, **caractérisée en ce que** les panneaux (2) peuvent être fermés de façon serrée les uns contre les autres.

9. Façade selon une des revendications 1 à 8, **caractérisée en ce que** un joint, par exemple un joint labyrinthe ou un joint élastique (16), est positionné sur les bords (6, 8) supérieur et/ou inférieur, qui sont formés congrûment, ainsi qu'éventuellement sur un ou les deux bords latéraux.

10. Façade selon une des revendications 1 à 9, **caractérisée en ce que** l'espace (13, 16) est divisé en au moins deux portions verticalement superposés.

11. Façade selon une des revendications 1 à 10, **caractérisée en ce que** sur le bord supérieur d'une face (5) vis-à-vis du mur (1) du bâtiment dans l'état fermé le panneau présente une face (10) penchée vers l'extérieur et vers le bord supérieur.

12. Façade selon une des revendications 1 à 11, **caractérisée en ce que** une unité d'entraînement est prévue pour pivoter les panneaux (2) et qu'un élément élastique de compensation est positionné dans une chaîne cinématique entre l'unité d'entraînement et les panneaux (2) respectifs.

13. The façade according to any of the claims 1 to 12, **characterized in that** a drive unit is provided for pivoting the panels (2) and that the drive unit is firmly held in place by an elastic compensation element.

14. A method for controlling the thermal and technical properties of a façade on a building wall (1) according to any of the claims 1-13 by using movable panels (2), preferably panels pivotable around a vertical or horizontal axis (4), **characterized in that** a space (13, 16) formed between the building wall (1) and façade elements (2, 3) is opened when convection and/or radiation exchange with the environment is desirable and is closed when convection and/or radiation exchange with the environment is undesirable.

15. The method according to claim 14, **characterized in that** the motion of the panels (2) is automatically controlled and quickly reacts to weather events.
